# EUROPÄISCHE PATENTANMELDUNG

(11) **EP 1 071 049 A2**
(43) Veröffentlichungstag der Anmeldung: **24.01.2001**
(21) Anmeldenummer: 00115809.6
(22) Anmeldetag: 21.07.2000
(51) Int. Cl.: G07F 7/10, G06K 19/07

(54) **Transportables Datenkommunikationsgerät mit Chipkarte und Funkschnittstelle**

(30) Priorität: 22.07.1999 DE 19933878
(71) Anmelder: Schneider, Bernd, 01462 Ockerwitz (DE)
(72) Erfinder: Schneider, Bernd, 01462 Ockerwitz (DE)
(74) Vertreter: Weissfloh, Ingo

(57) **Zusammenfassung**

Die Erfindung beschreibt ein transportables Datenkommunikationsgerät mit Chipkarte und Funkschnittstelle mit dem gleichzeitig mehrere elektronische Dienstleistungen mit einem einzigen Gerät ausgeführt werden können.

Der Erfindung liegt die Aufgabe zu Grunde, bekannte handelsübliche transportable Datenkommunikationsgeräte so zu verändern, daß des weiteren elektronische Dienstleistungen, die bislang jeweils unabhängige Geräte oder Verfahren erforderten, mittels eines einzigen Gerätes erledigen zu können, wobei sich gleichzeitig die Variationsmöglichkeiten der einzelnen Dienstleistung erhöhen, die Datensicherheit verbessert wird und der Mißbrauch weitgehend eingeschränkt wird.
Erfindungsgemäß ist in einem transportables Datenkommunikationsgerät, das eine oder mehrere Chipkarten und eine Funkschnittstelle besitzt, eine wahlweise kontaktbehaftete oder auch kontaktlose Chipkarte 1 angeordnet. Auf dieser Chipkarte 1 und/oder im Datenkommunikationsgerät an einer anderen Stelle ist ein datenkommunikationsgeräteinterner Transponder 3 und/oder eine datenkommunikationsgeräteinterne Antenne 4 angeordnet. Der datenkommunikationsgeräteinterne Transponder 3 speichert und verarbeitet und tauscht Informationen über die Antenne 4 mit einen anderen extern angeordneten stationären oder transportablen Transponder 10 aus. Der datenkommunikationsgeräteinterne Transponder 3 kommuniziert mit einem extern angeordneten stationären oder transportablen Transponder 10, der seinerseits in einem stationären oder transportablen Adapter oder Gerät eingebaut ist. Damit lassen sich mit dem erfindungsgemäßen transportablen Datenkommunikationsgerät vielfältige zusätzliche Funktionen steuern, wobei weitere elektronische Dienstleistungen, die bislang jeweils unabhängige Geräte oder Verfahren erforderten, mittels eines einzigen Gerätes erledigen werden können.
Die Erfindung ist anwendbar als Erweiterung des Einsatzes von mobilen Funktelefonen, wie z. B. für unterschiedliche Bezahlvorgänge oder die Übermittlung von hochsensiblen persönlichen Daten.

## Beschreibung

Die Erfindung beschreibt ein transportables Datenkommunikationsgerät mit Chipkarte und Funkschnittstelle mit dem gleichzeitig mehrere elektronische Dienstleistungen mit einem einzigen Gerät ausgeführt werden können. Es ist anwendbar als Erweiterung des Einsatzes von mobilen Funktelefonen, wie z. B. für unterschiedliche Bezahlvorgänge oder die Übermittlung von hochsensiblen persönlichen Daten.

Es ist bekannt, daß Mobiltelefone immer mehr zu einem universellen Instrument werden, mit dem der Eigentümer über ein einziges Gerät telefoniert, Auskünfte einholt, seine Wertpapiergeschäfte abwickelt, Fahrkarten und Eintrittskarten kauft und nachweist usw.

Des weiteren sind Lösungen bekannt, wo über Mobiltelefone, die über zwei Karten-Slots verfügen, per Mobiltelefon eine in einen Karten-Slot gesteckte Geldkarte wieder aufgeladen wird. Sinn ist es, mit wiederaufladbaren Geldkarten Kleingeld zu ersetzen.

Aus der EP 0 888 597 ist ein Verfahren zur Datenkommunikation bekannt, bei dem mittels eines Erfassungsgerätes durch einen Sender bestimmte Nutzer-Daten erfaßt und mit spezifischen zugehörigen Adressdaten versehen werden, wobei diese Adressdaten einem berechtigten Empfänger auf dessen Hostrechner zur Ausgabe derselben zur Verfügung gestellt werden. Allerdings sind mit diesem Verfahren nur Datenübertragungen von hochsensiblen persönlichen Daten möglich.

Der Erfindung liegt die Aufgabe zu Grunde, bekannte handelsübliche transportable Datenkommunikationsgeräte, die mit einer Chipkarte und einer Funkschnittstelle ausgerüstet sind, so zu verändern, daß des weiteren elektronische Dienstleistungen, die bislang jeweils unabhängige Geräte oder Verfahren erforderten, mittels eines einzigen Gerätes erledigt werden können, wobei sich gleichzeitig die Variationsmöglichkeiten der einzelnen Dienstleistung erhöhen, die Datensicherheit verbessert wird und der Mißbrauch weitgehend eingeschränkt wird.

Erfindungsgemäß wird diese Aufgabe durch die Merkmale des unabhängigen Anspruches 1 gelöst. Dabei ist in einem transportables Datenkommunikationsgerät, das eine oder mehrere Chipkarten und eine Funkschnittstelle besitzt, eine wahlweise kontaktbehaftete oder auch kontaktlose Chipkarte 1 angeordnet. Auf dieser Chipkarte 1 mit dem Chip 2 und/oder im Datenkommunikationsgerät an einer anderen Stelle ist ein datenkommunikationsgeräteinterner Transponder 3 und/oder eine datenkommunikationsgeräteinterne Antenne 4 angeordnet. Der datenkommunikationsgeräteinterne Transponder 3 speichert, verarbeitet und tauscht Informationen über die Antenne 4 mit einen anderen extern angeordneten stationären oder transportablen Transponder 10 aus. Der datenkommunikationsgeräteinterne Transponder 3 kommuniziert mit einem extern angeordneten stationären oder transportablen Transponder 10, der seinerseits in einem stationären oder transportablen Adapter oder ein anderes Gerät eingebaut ist. Damit lassen sich mit dem erfindungsgemäßen transportablen Datenkommunikationsgerät vielfältige zusätzliche Funktionen steuern, wobei weitere elektronische Dienstleistungen, die bislang jeweils unabhängige Geräte oder Verfahren erforderten, mittels eines einzigen Gerätes erledigen werden können. Dabei erhöhen sich gleichzeitig die Variationsmöglichkeiten der einzelnen Dienstleistung, die Datensicherheit wird verbessert und der Mißbrauch wird weitgehend eingeschränkt.

In einer speziellen Ausführungsform ist der datenkommunikationsgeräteinterne Transponder 6 und/oder eine datenkommunikationsgeräteinterne Antenne 7 auf einer zweiten kontaktlosen oder kontaktbehafteten Chipkarte 5 angeordnet. Diese zweite Chipkarte 5 ist im Datenkommunikationsgerät in einem zusätzlich angeordneten zweiten Chipkartenslot eingebaut oder eingeschoben. Voraussetzung sind zwei Kartenslots im Datenkommunikationsgerät. Dies bietet sich an für Dienstleistungen, die sehr komplexe leistungsstarke Transponder mit hohem schaltungstechnischen Aufwand voraussetzen.

Bei entsprechender Ausbildung der Chipkarte 1 ist der datenkommunikationsgeräteinterne Transponder 3 und falls möglich auch eine datenkommunikationsgeräteinterne Antenne 4 direkt auf einer einzigen kontaktlosen oder kontaktbehafteten Chipkarte 1 angeordnet. Dies ist vor allem im Zuge der weiteren Miniaturisierung der Datenkommunikationsgeräte sinnvoll.

In gleicher Weise können bei entsprechender Ausbildung auf der kontaktlosen oder kontaktbehafteten Chipkarte 1 mehrere Chips 2 und/oder Transponder 3 schaltungsmäßig unabhängig voneinander angeordnet sein.

Für bestimmte Anwendungsfälle ist es sinnvoll auf der kontaktlosen oder kontaktbehafteten Chipkarte 1 mehrere Chips 2 und/oder Transponder 3 untereinander verschaltet anzuordnen.

Um die Sicherheit der transportables Datenkommunikationsgeräte gegen mißbräuchliche Benutzung weiter zu erhöhen, ist in einer speziellen Ausführung auf der kontaktlosen oder kontaktbehafteten Chipkarte 1 mindestens ein Chip 2 oder eine Baueinheit so ausgebildet, daß optische Informationen ausgewertet und/oder gespeichert werden können und/oder optisch kommunizieren können.

In einer bevorzugten Anwendung ist das transportables Datenkommunikationsgerät als ein Mobiltelefon ausgebildet. Mit dieser Art der erfindungsgemäßen Lösung lassen sich die meisten elektronischen Dienstleistungen in einem Gerät zusammengefaßt realisieren.

Das erfindungsgemäße transportables Datenkommunikationsgerät kann auch als ein transportabler Computer, insbesondere als ein Handheldcomputer ausgebildet sein, da Computer mit Funkschnittstellen bekannt sind.

Ist das transportable Datenkommunikationsgerät, wie bevorzugt als Mobiltelefon ausgebildet, ist es sinnvoll, daß der mobiltelefoninterne Transponder 8 und der extern angeordneten stationäre oder transportable Transponder 10 oder zumindest einer von beiden des weiteren mit einer Leitstelle entweder über Funknetz und/oder Festnetz und/oder Datennetz kommunizieren. Das erhöht die Sicherheit der Dienstleitungen erheblich. Dabei kann die den mobiltelefoninternen Transponder 8 enthaltende Chipkarte wahlweise kontaktbehaftet oder kontaktlos ausgebildet sein. Eine mobiltelefoninterne Antenne 9 kann angeordnet sein. Es ist aber auch möglich, bei entsprechender Verschaltung über die Funkantenne des Mobiltelefons zu kommunizieren.

Für spezielle Fälle ist der datenkommunikationsgeräteinterne Transponder 3, 6, 8 direkt mit der Elektronik zum Senden und Empfangen von Informationen verschaltet, wobei er von dieser Elektronik nicht oder nur teilweise steuerbar ist. Es gibt spezielle Anwendungsfälle, wo es insbesondere erforderlich ist, dem Kunden den Zugriff auf die Steuerung des datenkommunikationsgeräteinternen Transponders 3, 6, 8 zu verwehren.

Für weitere Anwendungsfälle kann es erforderlich sein, auch Dienstleistungen ausführen zu können, auch wenn das transportable Datenkommunikationsgerät ausgeschaltet ist oder die Batterie entladen ist. Hierbei ist der datenkommunikationsgeräteinterne Transponder 3, 6, 8 nicht direkt mit der Elektronik zum Senden und Empfangen von Informationen verschaltet.

Für bestimmte Kunden ist es sinnvoll, möglichst viele Dienstleistungen zu realisieren. Dabei ist es vorteilhaft, wenn der datenkommunikationsgeräteinterne Transponder 3, 6, 8 direkt mit der Elektronik zum Senden und Empfangen von Informationen verschaltet ist, von dieser Elektronik steuerbar ist und über die Elektronik ebenfalls auslesbar und/oder beschreibbar ist. Solche Fälle treten insbesondere bei Wartungsarbeiten an den entsprechenden Datenkommunikationsgeräten auf.

Bei eingeschränkten Dienstleistungswunsch des Kunden kann es vorteilhaft sein, daß der datenkommunikationsgeräteinterne Transponder 3, 6, 8 nur über den extern angeordneten stationären oder transportablen Transponder 10 sowohl auslesbar als auch beschreibbar ist.

Für die Fälle, wo es sinnvoll ist, kann der datenkommunikationsgeräteinterne Transponder 3, 6, 8, bzw. eine Transpondereinheit, bestehend aus Transponder und/oder Antenne und/oder Anschlußleitungen als Nachrüstbausatz ausgebildet sein, wobei er nachträglich im transportablen Datenkommunikationsgerät angeordnet werden kann. So ist ein einkleben oder einkletten an freien Stellen im Gehäuse eines transportablen Datenkommunikationsgerätes denkbar.

Aus Sicherheitsgründen kann der datenkommunikationsgeräteinterne Transponder 3, 6, 8 mit einem eigenen Identifikationssystem versehen sein.

Ebenfalls aus Sicherheitsgründen kann der datenkommunikationsgeräteinterne Transponder 3, 6, 8 so geschaltet sein, daß er in Abhängigkeit vom einem beliebig wählbaren Zeitintervall alle Kommunikationsvorgänge unterbricht und damit ein Mißbrauch z. B. nach Diebstahl oder nach anderweitigen Verlust zuverlässig vermieden wird.

Für bestimmte Anwendungsfälle kann der datenkommunikationsgerätinterne Transponder 3, 6, 8 selbst als Lese- und/oder Schreibmodul ausgebildet sein, um bestimmte Datenströme in externen Transpondern auszulösen oder Informationsverarbeitungen zu veranlassen.

In einem speziellen Anwendungsfall, wenn der externe Transponder 10 ein implantierbarer Patientenchip ist, ist es möglich, die vom implantierten Patientenchip erfaßten Körperdaten, z. B. eines Risikopatienten mit dem transportablen Datenkommunikationsgerät auszulesen, zu verschlüsseln und über die Funkschnittstelle einer Zentrale (z. B. ein Krankenhaus) diese Daten zur Auswertung zur Verfügung zu stellen.

Für spezielle Anwendungen ist es sinnvoll den datenkommunikationsgeräteinternen Transponder 3, 6, 8 und/oder den extern angeordneten stationären oder transportablen Transponder 10 so auszubilden, daß einer oder auch beide Infrarotschnittstellen besitzten.

Ebenfalls ist es für die Auswertung von Daten oder für das Kommunizieren sinnvoll, das transportable Datenkommunikationsgerät so auszubilden, daß entweder der datenkommunikationsgeräteinterne Transponder 3, 6, 8 und/oder der extern angeordneten stationäre oder transportable Transponder 10 Schnittstellen zur optischen Signalverarbeitung besitzen.

In einer Ausführungsmöglichkeit sind als datenkommunikationsgeräteinterne Transponder 3, 6, 8 und/oder der extern angeordnete stationäre oder transportable Transponder 10 Chips bzw. integrierte Schaltungen mit komplexer Struktur eingesetzt, wobei diese Chips mit allen Funktionen einer Chipkarte ausgerüstet sein können. Sie können auch Speichermodulcharakter besitzen. Dabei können diese Chips unabhängig von dem Chip 2, der auf der Chipkarte 1 angeordnet ist, Datenströme speichern und verarbeiten.

Ein komplexes Sicherheitssystem ist realisierbar, wenn der datenkommunikationsgeräteinterne Transponder 3, 6, 8 und/oder der extern angeordnete stationäre oder transportable Transponder 10 mit stationären und /oder mobilen Datenbanksystemen datenleitungsgebunden und/oder funkgebunden kommunizieren können und damit ein mehrstufiges Sicherheitssystem mit mehrfachen Informationsaustauch zwischen dem Kunden und dem Dienstleistungspartner abarbeitbar ist. Die Dienstleistung kann dann jedesmal nach unterschiedlichen wählbaren Sicherheitscheks ausgeführt werden

Für spezielle Anwendungsmöglichkeiten kann der extern angeordnete stationäre oder transportable Transponder 10 nur als Chipkartenleser ausgebildet sein, der Datenströme ausliest und z. B. weiterleitet.

An Stellen, wo erhöhte Sicherheitsanforderungen notwendig sind, kann das erfindungsgemäße transportable Datenkommunikationssystem so ausgestaltet sein, daß der datenkommunikationsgeräteinterne Transponder 3, 6, 8 und/oder der extern angeordneten stationäre oder transportable Transponder 10 erst mit einem Fingerabdruckidentifikationssystem oder einem anderen Personenidentifikationssystem kommuniziert, bevor die Freigabe für weitere Tätigkeiten erfolgt.

Für bestimmte Anwendungsfälle sind der datenkommunikationsgeräteinterne Transponder 3, 6, 8 und/oder der extern angeordneten stationäre oder transportable Transponder 10 mit Spracherkennungssystemen ausgerüstet, wodurch sich die Bedienung vereinfacht.

Die Erfindung soll nachstehend in zwei Ausführungsbeispielen näher erläutert werden. Es zeigen:

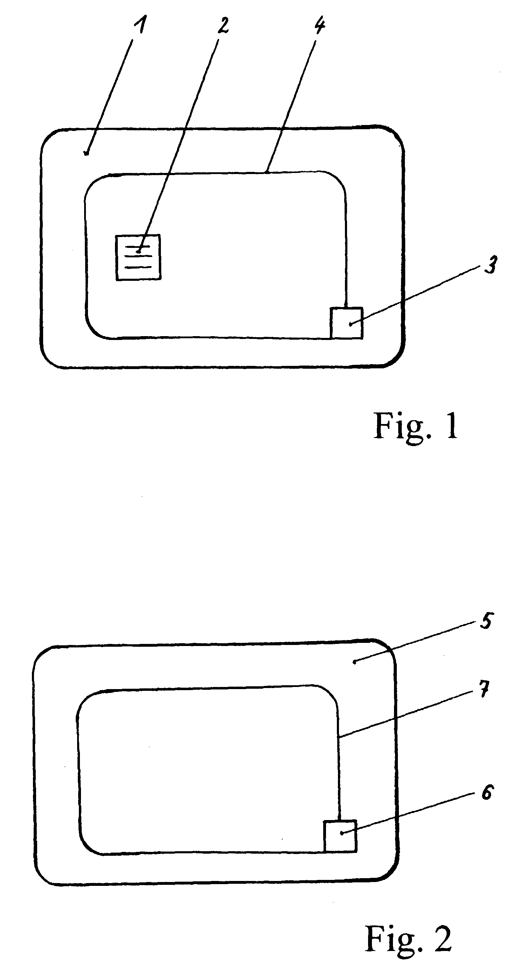

- Fig. 1: Chipkarte mit Chip,
- Fig. 2: Chipkarte ohne Chip,

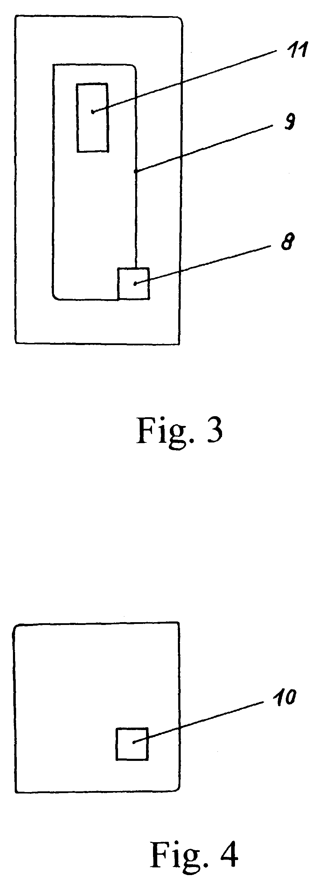

- Fig. 3: Mobiltelefon mit Transponder und Antenne und
- Fig. 4: stationärer oder mobiler Adapter oder Gerät mit Transponder.

Ein handelsübliches Mobiltelefon besitzt, um es überhaupt betreiben zu können, in seinem Inneren eine Netzkarte 11. Diese Netzkarte 11 ist entweder über Steckkontakte oder Auflagekontakte elektrisch mit der Funkeinheit verbunden. Erfindungsgemäß ist in diese Netzkarte 11 ein zusätzlicher mobiltelefoninterner Transponder 8 integriert. Dieser Transponder 8 ist ebenfalls als Chip an geeigneter Stelle auf der Netzkarte 11 angebracht. Des weiteren ist auf dieser Netzkarte eine mobiltelefoninterne Antenne 9 aufgebracht, die mit dem Transponder 8 verbunden ist und über die alle Schreib- und Lesevorgänge erfolgen. In ein Geldterminal ist als Gegenstück ein externer Transponder 10 (ein spezieller Chip) eingebaut. Dies kann ein stationäres Bankterminal oder auch ein transportables Abbuchungsterminal in Geschäften oder bei Händlern sein. Dieser externe Transponder 10 kommuniziert mit dem datenkommunikationsgeräteinteren (mobiltelefoninternen) Transponder 8 z. B. dadurch, daß das Mobiltelefon in eine Vertiefung des Geldterminals (in dem der externe Transponder 10 angeordnet ist) gelegt wird und damit eine räumliche Nähe des mobiltelefoninternen Transponder 8 mit dem externen Transponder 10 hergestellt ist. Sinnvollerweise wird der mobiltelefoninterne Transponder 8, der in der Regel als ein multifuntinaler Chip ausgebildet ist, und die Antenne 9 bereits bei der Herstellung der Telefonnetzkarten mit dem Telefonkartenchip auf der Netzkarte 11 eingebracht.

Der Transponder 8 ist zu diesem Zeitpunkt unbeschrieben und enthalt keinerlei Informationen. Der Transponder 8 besitzt entsprechende Speicherplätze und erlaubt das Einschreiben unterschiedlichster Informationen. Hierzu gehören z. B. die Daten, die bisher auf dem Magnetstreifen einer Geldkarte aufgebracht sind. Mit der erfindungsgemäßen Anordnung von datenkommunikatinsgeräteinternen (mobiltelefoninternen) Transpondern 8 in Mobiltelefonen, das Einspeichern der erforderlichen Informationen und Bezahlvorgänge auf diesen datenkommunikationsgeräteinternen (mobiltelefoninternen) Transponder 8 (PayChips) zu möglichen und der Anordnung von externen Transponder 10 einschließlich der notwendigen Informationen an geeigneter Stelle in Geldterminals (Handy-Pay-Adapter), wird es erstmals möglich, mit dem Mobiltelefon die gleichen finanziellen Transaktionen wie mit Geldkarten vorzunehmen.

In einer bevorzugten Ausführungsform ist der PayChip mit dem Chip der Telefon-Netzkarte 11 verschalten und wird über die Telefon-Netzkarte mit Strom aus der Batterie des Mobiltelefons gespeist. Damit ist es möglich, den PayChips direkt über die Mobiltelefontastatur zu steuern. Er kann dann sowohl direkt vom Handy aus oder auch über das Geldkartenterminal mittels Eingabe von alphanumerische Zeichenfolgen die Steuerung der finanziellen Transaktionen erfolgen. Bei einer Stromversorgung vom Mobiltelefon besteht des weiteren die Möglichkeit, den PayChip durch Eingabe einer oder mehrerer PIN's zu aktivieren. Nach (n) Minuten kann zur Sicherheit eine automatische Deaktivierung erfolgen, so daß ein gestohlenes oder verlorenes Mobiltelefon auch im eingeschalteten Zustand zur Bezahlung nicht benutzt werden kann.

Darüber hinaus ist es möglich, durch Eingabe verschiedener PIN's verschiedene Zahlungsmöglichkeiten zu realisieren. Der Kunde kann dann ebenfalls selbst wählen von welchem Konto bei welcher Bank der Zahlungsvorgang ausgehen soll, ohne ständig eine Vielzahl von verschiedenen Geldkarten mit sich zu führen. Auch Nutzungsbeschränkungen sind vom Kunden selbst programmierbar, so kann er z. B. selbst die Höhe bestimmen, die maximal vom PayChip abbuchbar ist oder ob ab einer bestimmten Betragshöhe weitere Sicherheitsabfragen erfolgen sollen. Er ist in der Lage selbst PIN's zu vergeben, die außer ihm keiner kennt.

Auch die Kreditkartengesellschaften können für jeden Kunden individuelle Beschränkungen für Tages- und Monats-Höchstsätze festlegen und bei Bedarf so ändern, daß die abbuchbare Betragshöhe in Relation zum tatsächlich aktuellen Bankguthaben steht. Die Konstruktion der Telefon-Netzkarte 11 mit dem PayChip erlaubt, daß die gespeicherten Informationen, die von einem speziellen Schreibgerät auf die zu beschreibende Telefon-Netzkarte 11 erfolgen sollen, nur von zugelassenen Geräten aufgeschrieben werden können, die den gleichen Basiscode besitzen, wie der mobiltelefoninterne PayChip. Ebenfalls ist es möglich, so zu verfahren, daß auch das Auslesen der Informationen nur von bestimmten Handy-Pay-Adaptern erlaubt ist, die zum Beispiel mit einer Leitzentrale kommunizieren. Anderenfalls ist ein Auslesen der Informationen unmöglich.

Die finanzielle Transaktion ist bei Nutzung des erfindungsgemäß ausgestatteten Mobiltelefons zunächst völlig identisch mit dem Bezahlen über Karte. Die Unterschiede bestehen im Wesentlichen darin, daß kein Magnetstreifen gelesen, sondern die Informationen aus dem PayChip übertragen werden. Der wesentliche Vorteil liegt in einer höheren Sicherheit gegenüber der normalen Kreditkarte, die bei Verlust durch kopieren der Unterschrift leicht mißbräuchlich eingesetzt werden kann.

Eine einfach zu realisierende Benutzung eines erfindungsgemäßen transportablen Datenkommunikationssystems auf der Basis eines Mobiltelefons mit PayChip und Handy-Pay-Adapter erfolgt auf folgende Art und Weise.
Eine mit einem PayChip ausgestattete Netzkarte 11 wird an den Netzbetreiber ausgeliefert. Der Netzbetreiber programmiert den Netzkartenchip für die Telefonbenutzung.
Der PayChip wird anschließend mit Daten einer gewünschten Kreditkartengesellschaft beschrieben. Alternativ kann die Netzkarte 11 auch mit einem Sicherheitscode vorbelegt sein und wird über eine oder mehrere SMS durch beliebige Kreditkartengesellschaften für Ihre jeweils eigenen Zwecke belegt und aktiviert. Die Netzkarte 11 mit PayChip wird an den Endkunden ausgeliefert. Dieser installiert seine Netzkarte 11 im Mobiltelefon. Darm erfolgt die Kartenfreischaltung durch den Netzbetreiber. Der Endkunde kann nun seine Netzkarte 11 zum Telefonieren benutzen.

Die Kreditkartengesellschaft sendet eine SMS oder mehrere SMS mit Freischaltungsinformationen an diese Netzkarte 11. Hier kann wahlweise bereits zur Sicherheit des Kunden eine Reaktion mittels einer oder mehrerer Kunden-SMS vorgesehen werden. Damit wird über die Netzkarte 11 der PayChip so aktiviert, daß die gewünschte Dienstleistung, z. B. eine Bezahlfunktion, grundsätzlich mittels des Mobiltelefons bereitsteht.

Zur Sicherheit kann gemäß einer Vereinbarung zwischen Kunden und Kreditkartengesellschaft eine erneute Aktivierung zur Freigabe der eigentlichen Payfunktion in einem selbst bestimmten Zeitintervall erfolgen. Dies kann täglich, nach beliebig vielen Stunden oder nach einer bestimmten Menge von Zahlvorgängen sein.

Damit die Zahlfunktion erneuert wird, setzt der Kartenkunde eine SMS an eine Zielnummer ab. Diese SMS enthält einen vereinbarten Code zur Identifizierung. z. B. [abcdefg 5]. Dabei steht abcdefg flur den vereinbarten Code, die 5 für die Anforderung, weitere 5 Zahlvorgänge freizugeben.

Wird bei der Zieladresse der passende Code zur mitgelieferten Netzkarten- und/oder Telefonnummer als richtig erkannt, wird eine verschlüsselte Freigabe an die Netzkarte 11 gesendet. Hierdurch wird der PayChip freigegeben, es ist dann nicht nötig, daß das Mobiltelefon beim Bezahlvorgang selbst eingeschaltet ist. Bezahlen ist somit auch möglich, wenn der Akku keine Betriebsspannung mehr hat oder der Bezahlvorgang an einem Ort erfolgt, bei dem keine Verbindung zu einem Mobilnetz besteht.

In einem erfindungsgemäßen transportablen Datenkommunikationsgerät kann die Belegung der Speicherplätze wie folgt organisiert werden. Es sind sogenannte allgemeine Speicherplätze vorgesehen, dabei sind vorzugsweise die Speicherplätze eins bis neun für allgemeine Informationen reserviert. Im ersten Speicherplatz wird über einen Code verwaltet, welche Kartengesellschaften auf dem PayChip in welchen Speicherplätzen abgelegt sind (Homeadressen).
Platz 2 beinhaltet z. B. die Information 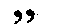 Karte zum Bezahlen freigegeben oder gesperrt". Im allgemeinen Speicherbereich sind ebenfalls Informationen abgelegt, welche zusätzlichen Bedingungen erfüllt werden müssen, wenn bestimmte Betragshöhen überschritten werden.

Fur jede Netzkartengesellschaft wird ein sogenannter Homespeicherbereich von (n) Plätzen reserviert. Ein Homespeicherplatz wird benötigt, um die Basisdaten der jeweiligen Netzkartengesellschaft abzulegen. Ein weiterer Homespeicherplatz ist zur Ablage des zuletzt verfügten Betrages vorgesehen. Dieser dient zur zweifelsfreien Identifizierung. Gleichzeitig kann dieser wechselnde Wert auch zur individuellen Verschlüsselung verwendet werden.

In einem weiteren Homespeicherplatz werden die aktuell gültigen Freischaltungsinformationen verwaltet. Wurden beispielsweise 5 Zahlungsvorgänge freigegeben, steht hier eine 5, die mit jedem Zahlvorgang um einen Zähler vermindert wird. Bei Null ist keine Zahlung mehr möglich. Es wird eine entsprechende Meldung am entweder über das Display des Mobiltelefons oder das mit dem Handy-Pay-Adapter verbundene Display ausgegeben.

In einer Ausführung übernimmt eine zentrale Software folgende Funktionen.
Der Kunde kann seine eigene Kunden-PIN vergeben, die in der zentralen Software gespeichert wird. Auf dem PayChip selbst wird keine PIN gespeichert. Diese Kunden-PIN wird in der jeweiligen Software, die bei der Netzkartengesellschaft installiert ist, verwaltet. Hier wird auch zur Kontrolle der zuletzt verfügte Zahlbetrag gespeichert.

Die Freischaltung ist per SMS über ein GSM-Mobiltelefon durchführbar.
Um eine Freischaltung zu beantragen, werden vom Kunden der Freischaltungswunsch, die Anzahl Zahlvorgänge und die Kunden-PIN als SMS an die Zielnummer der Netzkartengesellschaft abgesandt. Durch die SMS-Funktionalität werden zusätzlich die Telefonnummer und/oder Kartennummer (wenn nicht identisch) an den Empfänger, die Netzkartengesellschaft übertragen. Stimmen die Daten mit den eingespeicherten und verwalteten Daten überein, wird eine SMS an den Kunden zurückschickt. Diese enthält den Freischaltungseintrag und den zuletzt verfügten Zahlbetrag. Stimmt der Zahlbetrag mit der gespeicherten Information auf dem PayChip überein, wird der Freischaltungseintrag auf den PayChip geschrieben. Wenn nicht, muß eine Fehlermeldung ausgegeben werden.

Der eigentliche Bezahlvorgang verläuft dabei wie folgt. Das Mobiltelefon mit dem integrierten PayChip wird auf ein stationären oder transportblen Adapter oder ein entsprechendes Gerät gelegt. Dieser Adapter oder das Gerät (z. B. ein Point of Sale-Terminal) enthält den Handy-Pay-Adapter. PayChip und Handy-Pay-Adapter müssen dabei in enge räumliche Nähe gebracht werden, so daß sie miteinander kommunizieren können. Ist das Mobiltelefon mit dem PayChip auf den PayAdapter gelegt, erfolgt das Auslesen der PayChipInformationen. Ist der PayChip für Zahlvorgänge gesperrt, werden auch keine weiteren Informationen zum Lesen freigegeben. Befinden sich in den Speichern Einträge, die das Zahlen erlauben, können Daten an den Handy-Pay-Adapter (fungiert als Lesechip) übertragen werden. Diese Informationen werden wie bisher beim Lesen von Magnetkarten weitergeleitet und die Eingabe einer PIN am Gerät erwartet. Wird der Vorgang positiv abgeschlossen, schreibt der Handy-Pay-Adapter eine entsprechende Information auf den PayChip zurück. Dies sind unter anderem die Betragshöhe, das Datum und die Verminderung um einen Zähler für den Zahlvorgang. Der Bezahlvorgang ist erfolgreich abgeschlossen.

Die Erfindung soll in einem zweiten Beispiel in der Ausführung als transportables Datenkommunikationsgerät für die Auswertung und Übermittlung von Körperdaten beschrieben werden. Dabei ist der externe Transponder-Chip ein implantierbarer Patientenchip. Solcherart Patientenchips sind bekannt und können mit Sensoren bestückt werden, die verschiedenste Körperdaten, wie z. B. Blutwerte, Körpertemperatur , Puls u. a. registrieren und speichern. Dieser Patientenchip wird unter der Haut eines mit Gesundheitsproblemen belasteten Risikopatienten dauerhaft implantiert. Er zeichnet dann in der Regel getaktet bestimmte sinnvoll zu überwachende Körperdaten des Patienten auf. Mittels des datenkommunikationsgeräteinternen Transponder-Chips sind diese Körperdaten bei Bedarf oder in einem vorgeschrieben Rhythmus aus dem Patientenchip auslesbar, indem das transportable Datenkommunikationsgerät in die unmittelbare Nähe des implantierten Patientenchips gehalten wird. Die ausgelesenen Körperdaten sind jetzt sowohl direkt auswertbar als auch unausgewertet weitergebbar. Die Körperdaten können ebenfalls nach einer ersten Auswertung verschlüsselt und über die Funkschnittstelle einer Zentrale (z. B. ein Krankenhaus oder Patientenüberwachungssystem) diese Daten zur weiteren Überwachung, Auswertung und/oder Speicherung zur Verfügung gestellt werden.

### Darstellung der verwendeten Bezugszeichen

- 1: Chipkarte
- 2: Chip
- 3: datenkommunikationsinterner Transponder
- 4: datenkommunikationsgeräteinterne Antenne
- 5: zweite kontaktlose oder kontaktbehaftete Chipkarte
- 6: datenkommunikationsgeräteinterne Transponder
- 7: datenkommunikationsgeräteinterne Antenne
- 8: mobiltelefoninterner Transponder
- 9: mobiltelefoninterne Antenne
- 10: extern angeordneter stationärer oder transportabler Transponder
- 11: Netzkarte

## Patentansprüche

1. Transportables Datenkommunikationsgerät mit Chipkarte und Funkschnittstelle,
dadurch gekennzeichnet,
daß im Datenkommunikationsgerät eine oder mehrere Chipkarten (1) angeordnet sind und auf der Chipkarte (1) mit dem Chip (2) und/oder im Datenkommunikationsgerät ein datenkommunikationsgeräteinterner Transponder (3) und/oder eine datenkommunikationsgeräteinterne Antenne (4) angeordnet sind, wobei der datenkommunikationsgeräteinterne Transponder (3) mit einem anderen extern angeordneten stationären oder transportablen Transponder (10) kommuniziert.

2. Transportables Datenkommunikationsgerät nach Anspruch 1,
dadurch gekennzeichnet,
daß der datenkommunikationsgeräteinterne Transponder (6) und/oder eine datenkommunikationsgeräteinterne Antenne (7) auf einer zweiten kontaktlosen oder kontaktbehafteten Chipkarte (5) angeordnet sind und die Chipkarte (5) im Datenkommunikationsgerät in einem oder einem zweiten im Datenkommunikationsgerät ausgebildeten Chipkartenslot angeordnet sind.

3. Transportables Datenkommunikationsgerät nach Anspruch 1,
dadurch gekennzeichnet,
daß der datenkommunikationsgeräteinterne Transponder (3) und/oder eine datenkommunikationsgeräteinterne Antenne (4) direkt auf einer einzigen kontaktlosen oder kontaktbehafteten Chipkarte (1) angeordnet sind.

4. Transportables Datenkommunikationsgerät nach Anspruch 2 oder 3,
dadurch gekennzeichnet,
daß auf der kontaklosen oder kontaktbehafteten Chipkarte (1) mehrere Chips (2) und/oder Transponder (3) schaltungsmäßig unabhängig voneinander angeordnet sind.

5. Transportables Datenkommunikationsgerät nach Anspruch 2 oder 3,
dadurch gekennzeichnet,
daß auf der kontaktlosen oder kontaktbehafteten Chipkarte (1) mehrere Chips (2) und/oder Transponder (3) untereinander verschaltet angeordnet sind.

6. Transportables Datenkommunikationsgerät nach Anspruch 5,
dadurch gekennzeichnet,
daß auf der kontaktlosen oder kontaktbehafteten Chipkarte (1) mindestens ein Chip (2) oder eine Baueinheit so ausgebildet ist, daß optische Informationen ausgewertet und/oder gespeichert werden und/oder optisch kommunizieren.

7. Transportables Datenkommunikationsgerät nach den Ansprüchen 1 bis 6,
dadurch gekennzeichnet,
daß das transportable Datenkommunikationsgerät als ein Mobiltelefon ausgebildet ist.

8. Transportables Datenkommunikationsgerät nach den Anspruch 1 bis 6,
dadurch gekennzeichnet,
daß das transportable Datenkommunikationsgerät als ein transportabler Computer ausgebildet ist.

9. Transportables Datenkommunikationsgerät nach Anspruch 7,
dadurch gekennzeichnet,
daß die im Mobiltelefon angeordnete Chipkarte (1) kontaktbehaftet oder kontaktlos ausgebildet ist und auf der Chipkarte (1) und/oder im Gehäuseinneren des Mobiltelefons ein mobiltelefoninterner Transponder (8) und/oder eine mobiltelefoninterne Antenne (9) angeordnet sind, wobei der mobiltelefoninterne Transponder (8) mit einem anderen extern angeordneten stationären oder transportablen Transponder (10) und/oder ein oder beide Transponder mit einer Leitstelle über das Funknetz und/oder Festnetz und/oder Datennetz kommunizieren.

10. Transportables Datenkommunikationsgerät nach Anspruch 1, 2, 7, 8 oder 9,
dadurch gekennzeichnet,
daß der datenkommunikationsgeräteinterne Transponder (3, 6, 8) direkt mit der Elektronik zum Senden und Empfangen von Informationen verschaltet ist und von dieser Elektronik nicht oder nur teilweise steuerbar ist.

11. Transportables Datenkommunikationsgerät nach Anspruch 1, 2, 7, 8 oder 9,
dadurch gekennzeichnet,
daß der datenkommunikationsgeräteinterne Transponder (3, 6, 8) nicht direkt mit der Elektronik zum Senden und Empfangen von Informationen verschaltet ist und auch bei ausgeschalteten transportablen Datenkommunikationsgerät betreibbar ist.

12. Transportables Datenkommunikationsgerät nach Anspruch 1, 2, 7, 8 oder 9,
dadurch gekennzeichnet,
daß der datenkommunikationsgeräteinterne Transponder (3, 6, 8) direkt mit der Elektronik zum Senden und Empfangen von Informationen verschaltet ist, von dieser Elektronik steuerbar ist und über die Elektronik auslesbar und/oder beschreibbar ist.

13. Transportables Datenkommunikationsgerät nach Anspruch 1, 2, 7, 8 oder 9,
dadurch gekennzeichnet,
daß der datenkommunikationsgeräteinterne Transponder (3, 6, 8) nur über den extern angeordneten stationären oder transportablen Transponder (10) sowohl auslesbar als auch beschreibbar ist.

14. Transportables Datenkommunikationsgerät nach Anspruch 1, 2, 7, 8 oder 9,
dadurch gekennzeichnet,
daß der datenkommunikationsgeräteinterne Transponder (3, 6, 8), bzw. eine Transpondereinheit bestehend aus Transponder (3, 6, 8) und/oder Antenne (4) und/oder Anschlußleitungen als Nachrüstbausatz im transportablen Datenkommunikationsgerät anordenbar ist.

15. Transportables Datenkommunikationsgerät nach Anspruch 1, 2, 7, 8, oder 9,
dadurch gekennzeichnet,
daß der datenkommunikationsgerätinterne Transponder (3, 6, 8) ein eigenes Identifikationssystem besitzt.

16. Transportables Datenkommunikationsgerät nach Anspruch 1, 2, 7, 8 oder 9,
dadurch gekennzeichnet,
daß der datenkommunikationsgerätinterne Transponder (3, 6, 8) so geschaltet ist, daß er in Abhängigkeit vom einem wählbaren Zeitintervall alle Kommunikationsvorgänge unterbricht.

17. Transportables Datenkommunikationsgerät nach Anspruch 1, 2, 7, 8 oder 9,
dadurch gekennzeichnet,
daß der datenkommunikationsgerätinterne Transponder (3, 6, 8) selbst als Lese- und/oder Schreibmodul ausgebildet ist.

18. Transportables Datenkommunikationsgerät nach Anspruch 1, 7, 8 oder 9,
dadurch gekennzeichnet,
daß der externe Transponder (10) ein implantierbarer Patientenchip ist.

19. Transportables Datenkommunikationsgerät nach Anspruch 1, 2, 7, 8 oder 9,
dadurch gekennzeichnet,
daß der datenkommunikationsgeräteinterne Transponder (3, 6, 8) und/oder der extern angeordneten stationäre oder transportable Transponder (10) ein oder mehrere Funkschnittstellen und/oder ein oder mehrere Infrarotschnittstellen besitzten.

20. Transportables Datenkommunikationsgerät nach Anspruch 1, 2, 7, 8 oder 9,
dadurch gekennzeichnet,
daß der datenkommunikationsgeräteinterne Transponder (3, 6, 8) und/oder der extern angeordneten stationäre oder transportable Transponder (10) Schnittstellen zur optischen Signalverarbeitung besitzten.

21. Transportables Datenkommunikationsgerät nach Anspruch 1, 2, 7, 8 oder 9,
dadurch gekennzeichnet,
daß der datenkommunikationsgeräteinterne Transponder (3, 6, 8) und/oder der extern angeordneten stationäre oder transportable Transponder (10) Chips bzw. integrierte Schaltungen mit komplexer Struktur enthalten, Chips mit allen Funktionen einer Chipkarte oder Speichermodulcharakter besitzen, wobei diese unabhängig vom Chip (2) auf der Chipkarte (1) angeordnet sind und Datenströme speichern und verarbeiten.

22. Transportables Datenkommunikationsgerät nach Anspruch 1, 2, 7, 8 oder 9,
dadurch gekennzeichnet,
daß der datenkommunikationsgeräteinterne Transponder (3, 6, 8) und/oder der extern angeordnete stationäre oder transportable Transponder (10) mit stationären und /oder mobilen Datenbanksystemen datenleitungsgebunden und/oder funkgebunden kommuniziert.

23. Transportables Datenkommunikationsgerät nach Anspruch 1 bis 16 und 19 bis 22,
dadurch gekennzeichnet,
daß der extern angeordnete stationäre oder transportable Transponder (10) als ein Chipkartenleser ausgebildet ist.

24. Transportables Datenkommunikationsgerät nach Anspruch 1 bis 23,
dadurch gekennzeichnet,
daß der datenkommunikationsgeräteinterne Transponder (3, 6, 8) und/oder der extern angeordneten stationäre oder transportable Transponder (10) mit einem Fingerabdruckidentifikationssystem oder einem anderen Personenidentifikationssystem kommuniziert.

25. Transportables Datenkommunikationsgerät nach Anspruch 1 bis 24,
dadurch gekennzeichnet,
daß der datenkommunikationsgeräteinteme Transponder (3, 6, 8) und/oder der extern angeordneten stationäre oder transportable Transponder (10) mit Spracherkennungssystemen ausgerüstet sind.
